# EUROPEAN PATENT APPLICATION

(11) **EP 4 151 674 A1**
(43) Date of publication of application: **22.03.2023**
(21) Application number: 22460006.4
(22) Date of filing: 31.01.2022
(51) Int. Cl.: C08J 3/18, C08J 5/18, C08J 9/00, C08L 1/02, C08L 5/04, C08L 5/12

(54) **METHOD OF OBTAINING FOIL BASED ON COMPONENTS**

(30) Priority: 08.02.2021 PL 43689121; 08.02.2021 PL 43689321; 08.02.2021 PL 43689821; 08.02.2021 PL 43689921; 08.02.2021 PL 43690021; 08.02.2021 PL 43690121; 08.02.2021 PL 43690221; 08.02.2021 PL 43690321; 08.02.2021 PL 43690421; 08.02.2021 PL 43690521
(71) Applicant: Politechnika Czestochowska, 42-201 Czestochowa (PL)
(72) Inventor: Zabochnicka- Swiatek, Magdalena, 42-202 Czestochowa (PL); Szota, Michal, 42-200 Czestochowa (PL)

(57) **Abstract**

The method of obtaining a film based on biochar components is characterized by the process, in which powdered carboxymethylcellulose in an amount of 0.05 to 5%, glycerol in an amount of 0.4 to 4%, and preferably distilled or demineralized water in an amount up to 100% by weight is added to sodium alginate powder or agar-agar powder or their mixtures in an amount of 1 to 20% and stirred preferably for 1 to 30 minutes. The next step is to add biochar, activated carbon, dust after burning the coals, powdered algae of the genus Chlorella sp., Scenedesmus sp. or cyanobacteria Spirulina sp., powdered organic waste, powdered peat, powdered synthetic fabric, powdered silver, powdered gold, or powdered copper in an amount of 1 to 70% by weight and stir preferably for 1 to 30 minutes and then to foam or immediately thermoform at a temperature of 50 to 200 °C to the desired shape. The material thus obtained is preferably sprayed with calcium chloride dihydrate and dried.

## Description

The subject is the method of obtaining foil based on components, especially for the storage of food, cosmetic, medical products, and applications in the agricultural industry.

The main advantages of the invention are the innovative composition of biodegradable polymers based on components made of algae and fillers, mainly waste, and the wastelessness of the process, in accordance with the economic model of the Circular Economy, the so-called CE, aimed at, inter alia, waste prevention, preparation for re-use, recycling, other recovery and disposal.

There are companies operating on the market, mainly from the energy sector, conducting research on the use of various methods of microalgae cultivation. The greatest patent activity in the field of algae is visible in Asia, the USA and Europe. In Europe, the greatest potential in this area is shown by countries such as Germany, Finland, Denmark, Sweden and Spain. Asia is characterized by the predominance of scientific research, with companies operating on the European and US markets being more technologically advanced in algae cultivation.

There is a patent (Shi and James, 2013-US8.524.811B2) for the production of thermoplastic algal mixtures, which concerns the maximum permissible algal content, the particle size of algae in powder form and the mechanical properties of the obtained polymer.

There is also the patent 2017-WO2017046356 (Lavoisier et al.), which includes claims concerning cultivation, harvesting, and the process of lowering the protein content of algae by use of enzymes, citric acid, or other chemicals. This patent also includes a method for obtaining a powdered form of algae.

Polish patents mainly include technologies of using photobioreactors for algae cultivation, production of feed ingredients, and methods of wastewater treatment using algae. The method of treatment of industrial wastewater and liquid waste from heavy metal ions using photosynthetic microorganisms (PL 209047B1) of the genus *Spirulina sp.,* developed by the Wroclaw University of Technology, consists in introducing cyanobacteria of the genus *Spirulina sp.* into industrial wastewater and liquid waste in the form of animate or inanimate biomass. In the purification process, metal cations bind to the surface of the cell wall of the algae and possibly introduce them into the cells through biosorption and/or bioaccumulation.

The patent No. PL209234 includes a method of producing feed additives in which microelements in the concentration ranges of 40-60 mg/g Mn, 40-50 mg/g Zn, 40-45 mg/g Fe, and 4.5-5 mg/g Cu are bound to a biocarrier. The method consists in that the biological material, in the form of microalgae of the genus *Spirulina sp., Chlorella sp. and Gloeocystis sp.* binds to microelements such as Mn, Zn, Fe, and Cu by ion exchange with carboxylic, hydroxyl, phosphoryl and amine groups of microalgae. Microelements bind to the surface of the cell wall by biosorption and additionally to subcellular structures in the bioaccumulation method.

The aim of the invention is to develop a method for obtaining a film that will be biodegradable in whole or in part under natural conditions of use. The resulting film is continuous, solid, and waterproof. It does not contain toxic ingredients, is flexible and is characterized by high strength and biodegradability within 3-6 months.

The essence of the invention is a method of obtaining a film based on biochar components. In this process, powdered carboxymethylcellulose in an amount of 0.05 to 5%, glycerol in an amount of 0,4 to 4%, and preferably distilled or demineralized water in an amount up to 100% by weight is added to sodium alginate powder or agar-agar powder or their mixtures in an amount of 1 to 20% and stirred preferably for 1 to 30 minutes. The next step is to add biochar, activated carbon, dust after burning the coals, powdered algae of the genus Chlorella sp., Scenedesmus sp. or cyanobacteria Spirulina sp., powdered organic waste, powdered peat, powdered synthetic fabric, powdered silver, powdered gold or powdered copper in an amount of 1 to 70% by weight and stir preferably for 1 to 30 minutes and then to foam or immediately thermoform at a temperature of 50 to 200 °C to the desired shape. The material thus obtained is preferably sprayed with calcium chloride dihydrate and dried. The method according to claim 1, characterized in that starch or modified starch is added to the sodium alginate or agar-agar. The best starch for this method is potato or maize starch, in an amount from 0.01-10 to 10-0.01. The ratio of sodium alginate powder to agar-agar is preferably from 0.01-10 to 10-0.01. The most convenient biochar is coconut biochar. The biochar is preferably biochar from organic waste from the fruit or vegetable industry, in the form of beet pomace, carrot pomace, or press-cake from rapeseed, linseed, or soybean. Another preferred biochar is biochar from organic forestry biomass waste, straw, wood sawdust, or leaves. Ideally, the added dusts are dusts after burning brown or hard coal, most preferably with a grain size of 10-200µm. When it comes to organic waste, the best choice is organic waste obtained from brewing coffee, peeling from vegetables, peeling from fruit or egg shells. The peat should be granulated with a pH of 3.5-6.5. Preferably the synthetic fabric is polyester, polyamide, elastane, or viscose.

The invention has been shown in the execution examples but the examples do not include all the execution variants according to the invention. The invention is fulfilled in all the ranges given.

Example 1. A colloidal base of the following composition was introduced into the reactor: 20 g of sodium alginate powder, 1 g of carboxymethylcellulose (CMC), 4 g of 85.46% glycerol and filled to 1 1 with distilled water. Shaken for 15 min. Powdered coconut biochar in the amount of 30% was then added to the colloidal base. Shaken for 15 min. The mix was foamed by known methods for 10 min. After this time, the liquid samples were transferred to a mould and heated at 80°C for 75 min. Subsequently, it was treated for 10 minutes with a solution of 15 g of calcium chloride dihydrate (CaCl₂ × 2H₂O). The produced biopolymers were separated from the vessels, washed with distilled water and dried. The result was a biofilm with a coconut biochar content suitable for use as biodegradable packaging. The biofilm does not contain toxic ingredients, is flexible and is characterized by high strength and biodegradability within 3-6 months.

### Example 2.

Example 2 differs from Example 1 in that activated carbon was added instead of biochar.

### Example 3

Example 3 differs from Example 1 in that, instead of biochar, dust after burning brown coal with granulation of 10 µm was added.

### Example 4.

Example 4 differs from Example 1 in that, instead of biochar, powdered cyanobacteria of the genus Spirulina sp. was added.

### Example 5.

Example 5 differs from Example 1 in that organic coffee waste was added instead of biochar.

### Example 6.

Example 6 differs from Example 1 in that powdered peat was added instead of biochar.

### Example 7.

Example 7 differs from Example 1 in that a synthetic fabric (polyamide) was added instead of biochar.

### Example 8.

Example 8 differs from Example 1 in that powdered silver was added instead of biochar.

### Example 9.

Example 9 differs from Example 1 in that powdered gold was added instead of biochar.

### Example 10.

Example 10 differs from Example 1 in that powdered copper was added instead of biochar.

Example 11. A colloidal base of the following composition was introduced into the reactor: 60 g of powdered agar-agar, 4 g of carboxymethylcellulose (CMC), 100g of 85,46% glycerol and filled to 1 l with distilled water. Shaken for 15 min. Then 20% coconut biochar powder was added to the colloidal base. Shaken for 15 min. The mix was foamed by known methods for 10 min. After this time, the liquid samples were transferred to a mould and heated at 70°C for 50 min. Subsequently, it was sprayed for 10 minutes with a solution of 15 g of calcium chloride dihydrate (CaCl₂ × 2H₂O). The produced biopolymers were separated from the vessels, washed with distilled water and dried. The result was a biofilm with a coconut biochar content suitable for use as biodegradable packaging. The biofilm does not contain toxic ingredients, is flexible, and is characterized by high strength and biodegradability within 3-6 months.

### Example 12.

Example 12 differs from Example 11 in that activated carbon was added instead of biochar.

### Example 13

Example 13 differs from Example 11 in that, instead of biochar, dust after burning brown coal with granulation of 10 µm was added.

### Example 14.

Example 14 differs from Example 11 in that, instead of biochar, powdered cyanobacteria of the genus Spirulina sp. was added.

### Example 15.

Example 15 differs from Example 11 in that organic coffee waste was added instead of biochar.

### Example 16.

Example 16 differs from Example 11 in that powdered peat was added instead of biochar.

### Example 17.

Example 17 differs from Example 11 in that a synthetic fabric (polyamide) was added instead of biochar.

### Example 18.

Example 18 differs from Example 11 in that powdered silver was added instead of biochar.

### Example 19.

Example 19 differs from Example 11 in that powdered gold was added instead of biochar.

### Example 20.

Example 20 differs from Example 11 in that powdered copper was added instead of biochar.

Example 21. A colloidal base of the following composition was introduced into the reactor: 10 g of powdered sodium alginate, 10 g of modified corn powdered starch, 1 g of carboxymethyl cellulose (CMC), 4 g of 85.46% glycerol and filled to 1 1 with distilled water. Shaken for 15 min. Then, powdered coconut biochar was added to the colloidal base in an amount of 40%. Shaken for 15 min. After this time, the liquid samples were transferred to a mould and heated at 90 °C for 55 min. Subsequently, it was sprayed for 10 minutes with a solution of 15 g of calcium chloride dihydrate (CaCl₂ × 2H₂O). The produced biopolymers were separated from the vessels, washed with distilled water and dried for 35 min. The result was a biofilm with a coconut biochar content suitable for use as biodegradable packaging. The biofilm does not contain toxic ingredients, is flexible, and is characterized by high strength and biodegradability within 3-6 months.

### Example 22.

Example 22 differs from Example 21 in that activated carbon was added instead of biochar.

### Example 23

Example 23 differs from Example 21 in that, instead of biochar, dust after burning brown coal with granulation of 10 µm was added.

### Example 24.

Example 24 differs from Example 21 in that, instead of biochar, powdered cyanobacteria of the genus Spirulina sp. was added.

### Example 25.

Example 25 differs from Example 21 in that organic coffee waste was added instead of biochar.

### Example 26.

Example 26 differs from Example 21 in that powdered peat was added instead of biochar.

### Example 27.

Example 27 differs from Example 21 in that a synthetic fabric (polyamide) was added instead of biochar.

### Example 28.

Example 28 differs from Example 21 in that powdered silver was added instead of biochar.

### Example 29.

Example 29 differs from Example 21 in that powdered gold was added instead of biochar.

### Example 30.

Example 30 differs from Example 21 in that powdered copper was added instead of biochar.

Example 31. A colloidal base with the following composition was introduced into the reactor: a mixture of 50 g of sodium alginate powder and 10 g of potato starch, 4 g of carboxymethylcellulose (CMC), 100 g of 85.46% glycerol and filled to 1 1 with distilled water. Stirred by shaking for 15 min. Then, powdered coconut biochar was added to the colloidal base in the amount of 20% of the base. Stirred by shaking for 15 min. After this time, the liquid was thermally formed - transferred to a mould and heated at 80 °C for 45 minutes. Subsequently, it was sprayed for 5 minutes with a solution of 20 g of calcium chloride dihydrate (CaCl₂ × 2H₂O). The produced biopolymers were separated from the vessels, washed with distilled water and dried for 60 min. The result was a biofilm with a coconut biochar content suitable for use as biodegradable packaging. The biofilm does not contain toxic ingredients, is flexible, and is characterized by high strength and biodegradability within 3-6 months.

### Example 32.

Example 32 differs from Example 31 in that activated carbon was added instead of biochar.

### Example 33

Example 33 differs from Example 31 in that, instead of biochar, dust after burning brown coal with granulation of 10 µm was added.

### Example 34.

Example 34 differs from Example 31 in that, instead of biochar, powdered cyanobacteria of the genus Spirulina sp. was added.

### Example 35.

Example 35 differs from Example 31 in that organic coffee waste was added instead of biochar.

### Example 36.

Example 36 differs from Example 31 in that powdered peat was added instead of biochar.

### Example 37.

Example 37 differs from Example 31 in that a synthetic fabric (polyamide) was added instead of biochar.

### Example 38.

Example 38 differs from Example 31 in that powdered silver was added instead of biochar.

### Example 39.

Example 39 differs from Example 31 in that powdered gold was added instead of biochar.

### Example 40.

Example 40 differs from Example 31 in that powdered copper was added instead of biochar.

Example 41. A colloidal base of the following composition was introduced into the reactor: a mixture of 10 g of sodium alginate and 10 g of agar-agar powder, 2 g of carboxymethyl cellulose (CMC), 35 g of 85.46% glycerol, and filled to 1 1 with distilled water. Stirred by shaking for 30 min. Then, powdered coconut biochar was added to the colloidal base in the amount of 30% of the base. Stirred by shaking for 15 min. After this time, the liquid was thermally formed - transferred to a mould and heated at 80°C for 45 minutes. Subsequently, it was sprayed for 10 minutes with a saturated solution of 15 g of calcium chloride dihydrate (CaCl₂ × 2H₂O). The produced biopolymers were separated from the vessels, washed with distilled water and dried for 120 min. The result was a biofilm with a coconut biochar content suitable for use as biodegradable packaging. The biofilm does not contain toxic ingredients, is flexible, and is characterized by high strength and biodegradability within 3-6 months.

### Example 42.

Example 42 differs from Example 41 in that activated carbon was added instead of biochar.

### Example 43

Example 43 differs from Example 41 in that, instead of biochar, dust after burning brown coal with granulation of 10 µm was added.

### Example 44.

Example 44 differs from Example 41 in that, instead of biochar, powdered cyanobacteria of the genus Spirulina sp. was added.

### Example 45.

Example 45 differs from Example 41 in that organic coffee waste was added instead of biochar.

### Example 46.

Example 46 differs from Example 41 in that powdered peat was added instead of biochar.

### Example 47.

Example 47 differs from Example 41 in that a synthetic fabric (polyamide) was added instead of biochar.

### Example 48.

Example 48 differs from Example 41 in that powdered silver was added instead of biochar.

### Example 49.

Example 49 differs from Example 41 in that powdered gold was added instead of biochar.

### Example 50.

Example 50 differs from Example 41 in that powdered copper was added instead of biochar.

Example 51. A colloidal base with the following composition was introduced into the reactor: a mixture of 40 g of sodium alginate and 10 g agar-agar powder and 5 g of potato starch, 4 g of carboxymethyl cellulose (CMC), 90 g of 85.46% glycerol and filled to 1 1 with distilled water. Stirred by shaking for 30 min. Then, powdered biochar from organic waste in the form of straw chop in the amount of 15% was added to the colloidal base. Stirred by shaking for 30 min. After this time, the liquid was thermally formed - transferred to a mould and heated at 120°C for 15 minutes. Subsequently, it was sprayed for 10 minutes with a solution of 20 g of calcium chloride dihydrate (CaCl₂ × 2H₂O). The produced biopolymers were separated from the vessels, washed with distilled water and dried for 60 min. A biofilm containing biochar from organic waste was created, suitable for use as biodegradable packaging. The biofilm does not contain toxic ingredients, is flexible, and is characterized by high strength and biodegradability within 3-6 months.

### Example 52.

Example 52 differs from Example 51 in that activated carbon was added instead of biochar.

### Example 53

Example 53 differs from Example 51 in that, instead of biochar, dust after burning brown coal with granulation of 10 µm was added.

### Example 54.

Example 54 differs from Example 51 in that, instead of biochar, powdered cyanobacteria of the genus Spirulina sp. was added.

### Example 55

Example 55 differs from Example 51 in that organic coffee waste was added instead of biochar.

### Example 56.

Example 56 differs from Example 51 in that powdered peat was added instead of biochar.

### Example 57.

Example 57 differs from Example 51 in that a synthetic fabric (polyamide) was added instead of biochar.

### Example 58.

Example 58 differs from Example 51 in that powdered silver was added instead of biochar.

### Example 59.

Example 59 differs from Example 51 in that powdered gold was added instead of biochar.

### Example 60.

Example 60 differs from Example 51 in that powdered copper was added instead of biochar.

Example 61. A colloidal base of the following composition was introduced into the reactor: a mixture of 0.05 g of sodium alginate and 50 g of agar-agar powder, 3 g of carboxymethyl cellulose (CMC), 110g of 85.46% glycerol, and filled to 1 1 with distilled water. Stirred by shaking for 30 min. Then, powdered biochar from organic waste in the form of wood sawdust in the amount of 30% was added to the colloidal base. Stirred by shaking for 15 min. After this time, the liquid was thermally formed - transferred to a mould and heated at 80 °C for 45 minutes. Subsequently, it was sprayed for 10 minutes with a solution of 15 g of calcium chloride dihydrate (CaCh x 2H₂O). The produced biopolymers were separated from the vessels, washed with distilled water and dried for 120 min. A biofilm containing biochar from organic waste was created, suitable for use as biodegradable packaging. The biofilm does not contain toxic ingredients, is flexible, and is characterized by high strength and biodegradability within 3-6 months.

### Example 62.

Example 62 differs from Example 61 in that activated carbon was added instead of biochar.

### Example 63

Example 63 differs from Example 61 in that, instead of biochar, dust after burning brown coal with granulation of 10 µm was added.

### Example 64.

Example 64 differs from Example 61 in that, instead of biochar, powdered cyanobacteria of the genus Spirulina sp. was added.

### Example 65

Example 65 differs from Example 61 in that organic coffee waste was added instead of biochar.

### Example 66.

Example 66 differs from Example 61 in that powdered peat was added instead of biochar.

### Example 67.

Example 67 differs from Example 61 in that a synthetic fabric (polyamide) was added instead of biochar.

### Example 68.

Example 68 differs from Example 61 in that powdered silver was added instead of biochar.

### Example 69.

Example 69 differs from Example 61 in that powdered gold was added instead of biochar.

### Example 70.

Example 70 differs from Example 61 in that powdered copper was added instead of biochar.

Example 71. A colloidal base of the following composition was introduced into the reactor: a mixture of 40 g of sodium alginate and 0.04 g of agar-agar powder, 3 g of carboxymethyl cellulose (CMC), 100 g of 85.46% glycerol, and filled to 1 l with distilled water. Stirred by shaking for 15 min. Then, powdered biochar from organic waste in the form of rapeseed press-cake in the amount of 20% was added to the colloidal base. Stirred by shaking for 15 min. After this time, the liquid was thermally formed - transferred to a mould and heated at 110°C for 20 minutes. Subsequently, it was sprayed for 10 minutes with a solution of 15 g of calcium chloride dihydrate (CaCl₂ × 2H₂O). The produced biopolymers were separated from the vessels, washed with distilled water, and dried for 90 min. A biofilm containing biochar from organic waste was created, suitable for use as biodegradable packaging. The biofilm does not contain toxic ingredients, is flexible, and is characterized by high strength and biodegradability within 3-6 months.

### Example 72.

Example 72 differs from Example 71 in that activated carbon was added instead of biochar.

### Example 73

Example 73 differs from Example 71 in that, instead of biochar, dust after burning brown coal with granulation of 10 µm was added.

### Example 74.

Example 74 differs from Example 71 in that, instead of biochar, powdered cyanobacteria of the genus Spirulina sp. was added.

### Example 75

Example 75 differs from Example 71 in that organic coffee waste was added instead of biochar.

### Example 76.

Example 76 differs from Example 71 in that powdered peat was added instead of biochar.

### Example 77.

Example 77 differs from Example 71 in that a synthetic fabric (polyamide) was added instead of biochar.

### Example 78.

Example 78 differs from Example 71 in that powdered silver was added instead of biochar.

### Example 79.

Example 79 differs from Example 71 in that powdered gold was added instead of biochar.

### Example 80.

Example 80 differs from Example 71 in that powdered copper was added instead of biochar.

Example 81. A colloidal base of the following composition was introduced into the reactor: a mixture of 5 g of sodium alginate and 30 g of agar-agar powder, 2 g of carboxymethyl cellulose (CMC), 95 g of 85.46% glycerol, and filled to 1 l with distilled water. Stirred by shaking for 15 min. Then, powdered biochar from organic waste in the form of linseed press-cake in the amount of 20% was added to the colloidal base. Stirred by shaking for 15 min. After this time, the liquid was thermally formed - transferred to a mould and heated at 110°C for 20 minutes. Subsequently, it was sprayed for 10 minutes with a solution of 15 g of calcium chloride dihydrate (CaCh x 2H₂O). The produced biopolymers were separated from the vessels, washed with distilled water, and dried for 90 min. A biofilm containing biochar from organic waste was created, suitable for use as biodegradable packaging. The biofilm does not contain toxic ingredients, is flexible, and is characterized by high strength and biodegradability within 3-6 months.

### Example 82.

Example 82 differs from Example 81 in that activated carbon was added instead of biochar.

### Example 83

Example 83 differs from Example 81 in that, instead of biochar, dust after burning brown coal with granulation of 10 µm was added.

### Example 84.

Example 84 differs from Example 81 in that, instead of biochar, powdered cyanobacteria of the genus Spirulina sp. was added.

### Example 85

Example 85 differs from Example 81 in that organic coffee waste was added instead of biochar.

### Example 86.

Example 86 differs from Example 81 in that powdered peat was added instead of biochar.

### Example 87.

Example 87 differs from Example 81 in that a synthetic fabric (polyamide) was added instead of biochar.

### Example 88.

Example 88 differs from Example 81 in that powdered silver was added instead of biochar.

### Example 89.

Example 89 differs from Example 81 in that powdered gold was added instead of biochar.

### Example 90.

Example 90 differs from Example 81 in that powdered copper was added instead of biochar.

Example 91. A colloidal base of the following composition was introduced into the reactor: 5 g of agar-agar powder, 1 g of carboxymethylcellulose (CMC), 5 g of 85.46% glycerol, and filled to 1 l with demineralized water. Shaken for 15 min. Then, powdered biochar from organic waste in the form of soybean press-cake in the amount of 25% was added to the colloidal base. Shaken for 15 min. The mix was foamed by known methods for 2 min. After this time, the liquid samples were transferred to a mould and heated at 85°C for 90 min. Subsequently, it was spotted for 10 minutes with a 30% solution of calcium chloride dihydrate (CaCh x 2H₂O). The produced biopolymers were separated from the vessels, washed with distilled water, and dried for 20 min. A biofilm containing biochar from organic waste was created, suitable for use as biodegradable packaging. The biofilm does not contain toxic ingredients, is flexible, and is characterized by high strength and biodegradability within 3-6 months.

### Example 92.

Example 92 differs from Example 91 in that activated carbon was added instead of biochar.

### Example 93

Example 93 differs from Example 91 in that, instead of biochar, dust after burning brown coal with granulation of 10 µm was added.

### Example 94.

Example 94 differs from Example 91 in that, instead of biochar, powdered cyanobacteria of the genus Spirulina sp. was added.

### Example 95

Example 95 differs from Example 91 in that organic coffee waste was added instead of biochar.

### Example 96.

Example 96 differs from Example 91 in that powdered peat was added instead of biochar.

### Example 97.

Example 97 differs from Example 91 in that a synthetic fabric (polyamide) was added instead of biochar.

### Example 98.

Example 98 differs from Example 91 in that powdered silver was added instead of biochar.

### Example 99.

Example 99 differs from Example 91 in that powdered gold was added instead of biochar.

### Example 100.

Example 100 differs from Example 91 in that powdered copper was added instead of biochar.

Example 101. A colloidal base of the following composition was introduced into the reactor: 60 g of agar-agar powder, 4 g of carboxymethylcellulose (CMC), 100 g of 85,46% glycerol and filled to 1 1 with distilled water. Stirred by shaking for 15 min. Then, powdered biochar from organic waste in the form of beet pomace in the amount of 10% was added to the colloidal base. Stirred by shaking for 15 min. After this time, the liquid was thermally formed - transferred to a mould and heated at 60 °C for 90 minutes. Subsequently, it was sprayed for 5 minutes with a 30% solution of calcium chloride dihydrate (CaCh × 2H₂O). The produced biopolymers were separated from the vessels, washed with distilled water, and dried for 60 min. At 60 °C. A biofilm containing biochar from organic waste was created, suitable for use as biodegradable packaging. The biofilm does not contain toxic ingredients, is flexible, and is characterized by high strength and biodegradability within 3-6 months.

### Example 102.

Example 102 differs from Example 101 in that activated carbon was added instead of biochar.

### Example 103

Example 103 differs from Example 101 in that, instead of biochar, dust after burning brown coal with granulation of 10 µm was added.

### Example 104.

Example 104 differs from Example 101 in that, instead of biochar, powdered cyanobacteria of the genus Spirulina sp. was added.

### Example 105

Example 105 differs from Example 101 in that organic coffee waste was added instead of biochar.

### Example 106.

Example 106 differs from Example 101 in that powdered peat was added instead of biochar.

### Example 107.

Example 107 differs from Example 101 in that a synthetic fabric (polyamide) was added instead of biochar.

### Example 108.

Example 108 differs from Example 101 in that powdered silver was added instead of biochar.

### Example 109.

Example 109 differs from Example 101 in that powdered gold was added instead of biochar.

### Example 110.

Example 110 differs from Example 101 in that powdered copper was added instead of biochar.

Example 111. A colloidal base with the following composition was introduced into the reactor: a mixture of 10 g of agar-agar powder and 10 g of corn starch, 2 g of carboxymethyl cellulose (CMC), 4 g of 85.46% glycerol, and filled to 1 1 with distilled water. Stirred by shaking for 25 min. Then, powdered biochar from organic waste in the form of carrot pomace in the amount of 18% was added to the colloidal base. Stirred by shaking for 25 min. After this time, the liquid was thermally formed - transferred to a mould and heated at 130 °C for 10 minutes. Subsequently, it was sprayed for 7 minutes with a solution of 15 g of calcium chloride dihydrate (CaCh x 2H₂O). The produced biopolymers were separated from the vessels, washed with distilled water, and dried for 30 min. A biofilm containing biochar from organic waste was created, suitable for use as biodegradable packaging. The biofilm does not contain toxic ingredients, is flexible, and is characterized by high strength and biodegradability within 3-6 months.

### Example 112.

Example 112 differs from Example 111 in that activated carbon was added instead of biochar.

### Example 113

Example 113 differs from Example 111 in that, instead of biochar, dust after burning brown coal with granulation of 10 µm was added.

### Example 114.

Example 114 differs from Example 111 in that, instead of biochar, powdered cyanobacteria of the genus Spirulina sp. was added.

### Example 115

Example 115 differs from Example 111 in that organic coffee waste was added instead of biochar.

### Example 116.

Example 116 differs from Example 111 in that powdered peat was added instead of biochar.

### Example 117.

Example 117 differs from Example 111 in that a synthetic fabric (polyamide) was added instead of biochar.

### Example 118.

Example 118 differs from Example 111 in that powdered silver was added instead of biochar.

### Example 119.

Example 119 differs from Example 111 in that powdered gold was added instead of biochar.

### Example 120.

Example 120 differs from Example 111 in that powdered copper was added instead of biochar.

## Claims

1. The essence of the invention is a method of obtaining a film based on biochar components. In this process, powdered carboxymethylcellulose in an amount of 0.05 to 5%, glycerol in an amount of 0.4 to 4%, and preferably distilled or demineralized water in an amount up to 100% by weight is added to sodium alginate powder or agar-agar powder or their mixtures in an amount of 1 to 20% and stirred preferably for 1 to 30 minutes. The next step is to add biochar, activated carbon, dust after burning the coals, powdered algae of the genus Chlorella sp., Scenedesmus sp. or cyanobacteria Spirulina sp., powdered organic waste, powdered peat, powdered synthetic fabric, powdered silver, powdered gold, or powdered copper in an amount of 1 to 70% by weight and stir preferably for 1 to 30 minutes and then to foam or immediately thermoform at a temperature of 50 to 200 °C to the desired shape. The material thus obtained is preferably sprayed with calcium chloride dihydrate and dried.

2. The method according to claim 1, **characterized in that** starch or modified starch is added to the sodium alginate or agar-agar. The best starch for this method is potato or maize starch, in an amount from 0,01-10 to 10-0,01.

3. The method according to claim 1 or 2, **characterized in that** the ratio of sodium alginate powder to agar-agar is from 0,01-10 to 10-0,01.

4. The method according to claim 1, 2 or 3 **characterized in that** the biochar is coconut biochar

5. The method according to claim 1, 2, or 3 **characterized in that** the biochar is preferably biochar from organic waste from the fruit or vegetable industry, in the form of beet pomace, carrot pomace, or press-cake from rapeseed, linseed, or soybean.

6. The method according to claim 1, 2 or 3, **characterized in that** the biochar is biochar from organic forest biomass waste, preferably straw, wood sawdust or leaves.

7. The method according to claim 1, 2 or 3, **characterized in that** the added dusts are those after burning of brown or black coal, preferably with a granulation of 10-200 µm.

8. The method according to claim 1, 2 or 3, **characterized in that** the organic waste is organic waste obtained from brewing the coffee.

9. The method according to claim 1, 2 or 3, **characterized in that** the organic waste is peeling from vegetables.

10. The method according to claim 1, 2 or 3, **characterized in that** the organic waste is peeling from fruit.

11. The method according to claim 1, 2 or 3, **characterized in that** the organic waste is egg shells.

12. The method according to claim 1, 2 or 3, **characterized in that** the peat is granulated.

13. The method according to claim 1, 2 or 3, **characterized in that** the peat has a pH of 3.5-6.5.

14. The method according to claim 1, 2 or 3 **characterized in that** the synthetic fabric is polyester

15. The method according to claim 1, 2 or 3 **characterized in that** the synthetic fabric is polyamide

16. The method according to claim 1, 2 or 3 **characterized in that** the synthetic fabric is elastane

17. The method according to claim 1, 2 or 3, **characterized in that** the artificial fabric is viscose
